# EUROPÄISCHE PATENTSCHRIFT

(11) **EP 1 144 823 B1**
(45) Veröffentlichungstag und Bekanntmachung des Hinweises auf die Patenterteilung: **28.07.2004**
(21) Anmeldenummer: 99962146.9
(22) Anmeldetag: 22.11.1999
(51) Int. Cl.: F02B 39/12

(54) **KOMPRESSOR FÜR EINEN VERBRENNUNGSMOTOR EINES KRAFTFAHRZEUGES**
COMPRESSOR FOR AN INTERNAL COMBUSTION ENGINE OF A MOTOR VEHICLE
COMPRESSEUR POUR LE MOTEUR A COMBUSTION INTERNE D'UN VEHICULE AUTOMOBILE

(30) Priorität: 24.11.1998 DE 29820921 U; 04.12.1998 DE 29821559 U
(43) Veröffentlichungstag der Anmeldung: 17.10.2001
(73) Patentinhaber: Sport-Service-Lorinser Sportliche Autoausrüstung GmbH, 71332 Waiblingen (DE)
(72) Erfinder: KOCH, Adolf, D-71332 Waiblingen (DE)
(74) Vertreter: Rotermund, Hanns-Jörg, Dipl.-Phys.
(86) Internationale Anmeldenummer: PCT/EP1999/008902
(87) Internationale Veröffentlichungsnummer: WO 2000/031393

(56) Entgegenhaltungen:
- EP-A- 0 392 330
- GB-A- 2 155 565
- US-A- 4 004 335
- US-A- 4 596 225
- US-A- 4 708 119
- US-A- 5 133 326
- PATENT ABSTRACTS OF JAPAN vol. 008, no. 080 (M-289), 12. April 1984 (1984-04-12) & JP 58 225231 A (NISSAN JIDOSHA KK), 27. Dezember 1983 (1983-12-27)

## Beschreibung

Die Erfindung betrifft einen Kompressor für einen Verbrennungsmotor eines Kraftfahrzeuges gemäß dem Oberbegriff des Anspruches 1.

Die US 5 133 326 A zeigt einen solchen Kompressor.

Die Verbrennungsmotoren einiger Personenkraftwagen werden serienmäßig mit derartigen Kompressoren ausgerüstet. Durch entsprechende Steuerung der elektromagnetischen Kupplung wird dabei gewährleistet, daß der Kompressor nur dann arbeitet, wenn der Verbrennungsmotor mit größeren Drehzahlen läuft und/oder gegen starke Last arbeitet bzw. stark beschleunigt werden soll.

Auf diese Weise läßt sich einerseits ein gutes Betriebsverhalten des Motors bei langsamer Fahrt, insbesondere bei einer Stadtfahrt mit häufigen Kriech- und Anhaltephasen, gewährleisten. Darüber hinaus reagiert der Motor bei entsprechender Betätigung des Fahrpedales mit deutlich,verstärkter, verzögerungsfreier Beschleunigung.

Desweiteren besteht die Möglichkeit, den Kompressor vom Verbrennungsmotor ständig antreiben zu lassen. Dabei ist regelmäßig vorgesehen, die vom Kompressor geförderte Luft erst oberhalb eines Schwellwertes der Motordrehzahl der Einlaßseite des Motors zuzuführen, d.h. unterhalb des vorgenannten Schwellwertes der Motordrehzahl arbeitet der Motor als reiner Saugmotor. Hierdurch wird vermieden, daß der vom Kompressor erzeugte Luftstrom bei niedrigen Motordrehzahlen eine unerwünschte Rückwirkung auf die heute übliche elektronische Motorsteuerung haben könnte, weil einerseits die zur Erfassung des ansaugseitigen Luftstromes dienenden Sensoren beeinflußt und andererseits die bei niedrigen Motordrehzahlen oftmals nahezu geschlossene Drosselklappe im Ansaugsystem durch den Luftstrom des Kompressors unerwünscht bewegt werden kann.

Zur Ableitung des vom Kompressor erzeugten Luftstromes dienen entsprechende Ventile bzw. Luftklappenanordnungen, durch die der Luftstrom des Kompressors entweder nach außen abgeleitet oder dem Motor zugeleitet werden kann.

Grundsätzlich besteht die Möglichkeit, Kraftfahrzeugmotoren mit Kompressoren nachzurüsten, um die verfügbare Leistung zu erhöhen. Allerdings sind Kompressoren zur Nachrüstung regelmäßig nicht auf die Kombination mit einer elektromagnetischen Kupplung ausgelegt. Vielmehr wird davon ausgegangen, daß der Kompressor vom Motor ständig - unterbrechungsfrei - angetrieben werden kann.

Dies führt aber bei modernen Motoren mit der oben erwähnten elektronischen Motorsteuerung, zu unerwünschten Rückwirkungen auf die Sensorik der Motorsteuerung.

Aufgabe der Erfindung ist es, bei einem Kompressor gemäß dem Oberbegriff des Anspruches 1 eine gute Steuerbarkeit der Kupplung zu gewährleisten.

Diese Aufgabe wird erfindungsgemäß von der Steuerung gelöst, die die Kupplung nur oberhalb eines Schwellwertes der Drehzahl des Verbrennungsmotors oder oberhalb eines mit der vorgenannten Drehzahl korrelierten Parameters zu schließen gestattet und die Kupplung unterhalb eines weiteren Schwellwertes der Drehzahl bzw. des korrelierten Parameters öffnet, wobei dieser weitere Schwellwert unterhalb des vorgenannten Schwellwertes liegt. Dies ermöglicht es, dass der Kompressor reproduzierbar ein- und ausgeschaltet wird.

Da die Kupplung mit steuerbarem Kupplungsmoment, d.h. mit steuerbarem übertragbaren Moment, arbeitet, werden sowohl Verbrennungsmotor als auch Kompressor sowie die Antriebsverbindung zwischen Motor und Kompressor beim Schließen der Kupplung nur maßvoll belastet. Insbesondere werden unerwünschte Belastungsspitzen vermieden, so daß die Antriebsverbindung eine vergleichsweise einfache Konstruktion aufweisen kann und weder die Lager der beweglichen Verdichterelemente des Kompressors noch die Lager der den Kompressor treibenden motorseitigen Elemente, z.B. Nockenwelle, verstärkt werden müssen.

Gemäß einer besonders bevorzugten Ausführungsform der Erfindung ist eine elektromagnetische Kupplung vorgesehen, wobei die Steuerung beim Einkuppeln einen elektrischen Kupplungsstrom mit Verzögerung bzw. mehrstufig verändert.

Damit wird eine gute Steuerbarkeit der Kupplung gewährleistet.

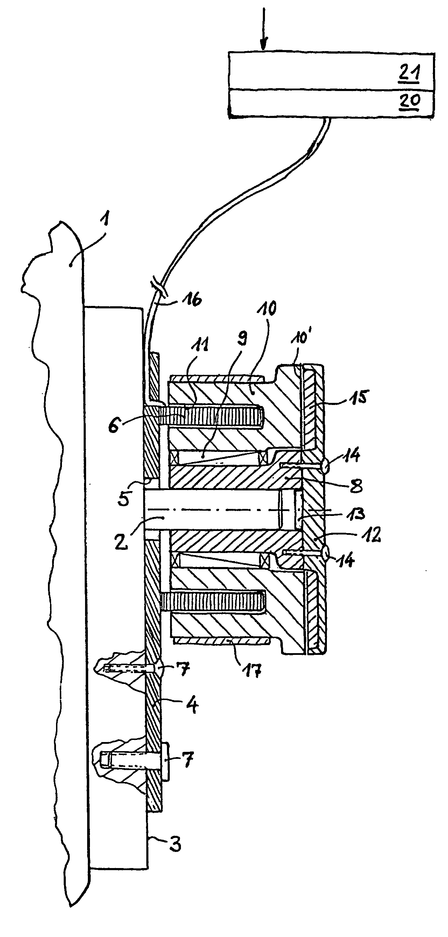

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung beschrieben wird.

Dabei zeigt die einzige Figur einen schematisierten Axialschnitt von Riemenrad und elektromagnetischer Kupplung auf der Eingangswelle des Kompressors.

Ein im Motorraum eines Kraftfahrzeuges untergebrachter, nicht näher dargestellter Kompressor besitzt ein in der Zeichnung nur teilweise dargestelltes Kompressorgehäuse 1 sowie eine den Kompressor antreibende Eingangswelle 2, die aus einer am Kompressorgehäuse 1 ausgebildeten Flanschfläche 3 herausragt.

Auf der Flanschfläche 3 ist eine Flanschplatte 4 befestigt, insbesondere festgeschraubt, welche eine von der Eingangswelle 2 durchsetzte Öffnung 5 besitzt und auf der eine Ringmagnet- bzw. Ringspulenanordnung 6 fest angeordnet ist. Damit die Ringmagnet- bzw. Ringspulenanordnung 6 exakt zentrisch zur Achse der Eingangswelle 2 positionierbar ist, sind die Aufnahmelöcher für die Befestigungsschrauben 7 der Flanschplatte 4 sowie die entsprechenden Befestigungsbohrungen in der Flanschfläche 3 entsprechend präzise angeordnet.

Auf der Eingangswelle 2 ist eine Hülse 8 drehfest und axial fest angeordnet. Auf dem Außenumfang dieser Hülse 8 sind ein oder mehrere Wälzlager 9 zur axialen und radialen Lagerung eines Riemenrades 10 gehaltert, welches dementsprechend auf der Hülse 8 leichtgängig drehgelagert und damit relativ zur Eingangswelle 2 drehbar ist. Dieses Riemenrad besitzt einen zum Kompressorgehäuse 1 hin offenen, zur Achse der Eingangswelle 2 konzentrischen Ringschlitz 11, der die Ringmagnet- bzw. Ringspulenanordnung 6 unter Freilassung schmaler Luftspalte aufnimmt.

Das vom Kompressorgehäuse 1 entfernte Stirnende der Hülse 8 ist als Flansch ausgebildet, an dem ein Lamellenträger 12 angeflanscht ist. Zur Zentrierung an der Hülse 8 kann der Lamellenträger 12 einen in die Axialbohrung der Hülse 8 radial spielfrei einschiebbaren Axialfortsatz 13 aufweisen. Im übrigen kann die Befestigung des Lamellenträgers 12 an der Hülse 8 durch ringförmig angeordnete Schrauben 14 erfolgen.

Auf seiner dem Riemenrad 10 zugewandten Seite trägt der Lamellenträger 12 eine relativ zum Lamellenträger 12 undrehbare, jedoch axial gegen Rückstellkraft verschiebbare, ringscheibenartige Lamelle 15, die mit einer Reibfläche 10' auf der dem Lamellenträger 12 zugewandten, ringscheibenartigen Stirnseite des Riemenrades 10 zusammenwirkt.

Bei elektrischer Bestromung der Ringmagnet- bzw. Ringspulenanordnung 6 wird die Lamelle 15 gegen Rückstellkräfte, die die Lamelle 15 (in der Zeichnung nach rechts) zum Lamellenträger 12 hin zurückzuziehen suchen, durch Magnetkräfte gegen die Reibfläche 10' des Riemenrades 10 gedrängt, so daß zwischen der Reibfläche 10' und der Lamelle 15 ein starker Kraftschluß auftritt und das Riemenrad 10 im Ergebnis mit der Eingangswelle 2 reibschlüssig gekuppelt wird.

Damit die Ringmagnet- bzw. Ringspulenanordnung 6 die Lamelle 15 magnetisch steuern kann, besteht die Lamelle 15 aus einem gut magnetisierbaren Material. Statt dessen können an der Lamelle 15 auch gut magnetisierbare Andruckkörper fest angeordnet sein. Im übrigen kann das Riemenrad 10 ebenfalls aus einem gut magnetisierbaren Werkstoff, insbesondere einem Eisenmaterial, bestehen, so daß das Riemenrad 10 bei elektrischer Bestromung der Ringmagnet- bzw. Ringspulenanordnung 6 einen stark magnetisierten Kern dieser Anordnung bildet und die magnetisierbare Lamelle 15 bzw. deren magnetisierbare Andruckkörper wirksam anzieht.

Die Bestromung der Ringmagnet- bzw. Ringspulenanordnung 6 erfolgt über ein Kabel 16, welches vorzugsweise in einer Nut untergebracht ist, die auf der der Flanschfläche 3 zugewandten Seite der Flanschplatte 4 ausgebildet ist und an eine die Flanschplatte 4 durchsetzende Bohrung an der Ringmagnet- bzw. Ringspulenanordnung 6 anschließt. Damit läßt sich das Kabel 16 von der Ringmagnet- bzw. Ringspulenanordnung 6 auf die vom Riemenrad 10 abgewandte Seite der Flanschplatte 4 führen und dort in einem von der Flanschplatte 4 sowie der Flanschfläche 3 umschlossenen Kabelkanal unterbringen.

Gegebenenfalls kann die zur Bildung des Kabelkanals vorgesehene Nut auch ganz oder teilweise in der Flanschfläche 3 des Kompressorgehäuses 1 ausgebildet sein.

Das Riemenrad 10 wird von einem Treibriemen 17 umschlungen, welcher im übrigen über ein ständig vom Fahrzeugmotor angetriebenes, nicht dargestelltes weiteres Riemenrad läuft. Dementsprechend wird das Riemenrad 10 beim Betrieb des Fahrzeugmotors ständig angetrieben, während der Kompressor nur dann arbeitet, wenn die Ringmagnet- bzw. Ringspulenanordnung 6 beim Motorbetrieb über das Kabel 16 bestromt wird und damit das Riemenrad 10 über die Lamelle 15 kraftschlüssig mit der Hülse 8 und dementsprechend mit der Eingangswelle 2 des Kompressors kuppelt.

Bei entsprechender Bestromung der Ringmagnet- bzw. Ringspulenanordnung 6 wird dann ein bedarfsgerechter Betrieb des Kompressors ermöglicht. Insbesondere kann gewährleistet werden, daß der Kompressor nur dann arbeitet, wenn dies ohne störende Rückwirkung auf eine Motorsteuerung möglich bzw. aufgrund einer hohen Leistungsanforderung an den Fahrzeugmotor erwünscht ist.

Das Kabel 16 ist zu Bestromung der Ringmagnet- bzw. Ringspulenanordnung 6 mit einer elektrischen Treiberstufe 20 verbunden, die ihrerseits von einer elektronischen Steuerschaltung betätigt wird und mit der Steuerschaltung 21 integriert sein kann.

Die Steuerschaltung 21 erhält eingangsseitig von nicht dargestellten Sensoren bzw. vorzugsweise von einer ebenfalls nicht dargestellten Motorsteuerung Signale, die die Motordrehzahl wiedergeben bzw. damit korreliert sind.

Sobald die Motordrehzahl einen ersten Schwellwert überschreitet, wird die Ringmagnet- bzw. Ringspulenanordnung 6 elektrisch bestromt. Diese Bestromung erfolgt zweistufig, derart, daß zunächst für eine vorgegebene Verzögerungszeit ein begrenztes Kupplungsmoment erzeugt wird und die Kupplung mit entsprechenden Schlupf arbeitet. Danach wird die Bestromung verstärkt, so daß ein hohes Kupplungsmoment erzeugt wird und die Kupplung nachfolgend schlupffrei arbeitet.

Auf diese Weise wird gewährleistet, daß der Kompressor beim Schließen der Kupplung "weich" beschleunigt und die motorseitigen Antriebselemente des Kompressors, beispielsweise eine Nockenwelle des Motors, entsprechend wenig und insbesondere ruckfrei belastet werden.

Sobald die Motordrehzahl einen weiteren Schwellwert, der unterhalb des vorgenannten Schwellwertes der Motordrehzahl liegt, unterschreitet, wird die Kupplung wieder geöffnet, wobei auch hier die Kupplung eine Schlupfphase durchlaufen kann, indem die Steuerung 21 den durch die Treiberstufe 20 gelieferten Kupplungsstrom gesteuert vermindert, so daß der Motor vom Antrieb des Kompressors "langsam" entlastet wird.

Gegebenenfalls kann der Kupplungstrom beim Schließen und/oder beim Öffnen der Kupplung auch vielstufig oder kontinuierlich erhöht bzw. vermindert werden.

## Patentansprüche

1. Kompressor (1) auf der Eingangsseite eines Verbrennungsmotors eines Kraftfahrzeuges, mit einer schaltbaren Kupplung (6,10',12,15) in der Antriebsverbindung (2,10,17) zwischen dem Verbrennungsmotor und dem Kompressor (1) und mit einer Steuerung (20, 21), die die Kupplung beim Schließen zunächst eine vorgegebene Schlupfphase durchlaufen lässt,
**gekennzeichnet,**
**durch** die Steuerung (20,21), die die Kupplung (6,10',12,15) nur oberhalb eines Schwellwertes der Drehzahl des Verbrennungsmotors oder oberhalb eines mit der Drehzahl korrelierten Parameters zu schließen gestattet und die Kupplung unterhalb eines weiteren Schwellwertes der Drehzahl bzw. des korrelierten Parameters öffnet, wobei dieser weitere Schwellwert unterhalb des vorgenannten Schwellwertes liegt.

2. Kompressor nach Anspruch 1,
**dadurch gekennzeichnet,**
**daß** eine elektromagnetische Kupplung vorgesehen ist und die Steuerung (20,21) beim Einkuppeln einen elektrischen Kupplungsstrom mit Verzögerung und/oder mehrstufig verändert.

3. Kompressor nach Anspruch 2,
**dadurch gekennzeichnet,**
**daß** der Kupplungsstrom beim Öffnen der Kupplung mit Verzögerung und/oder mehrstufig vermindert wird.

4. Kompressor nach einem der Ansprüche 1 bis 3,
**dadurch gekennzeichnet,**
**daß** eine den Kompressor treibende Eingangswelle (2) mit einem vom Verbrennungsmotor antreibbaren Riemenrad (10) über die schaltbare elektromagnetische Kupplung kuppelbar ist, welche stirnseitig eine am Riemenrad (10) angeordnete Reibfläche (10') sowie einen an der Eingangswelle (2) drehfest angeordneten Lamellenträger (12) und eine in einem Ringschlitz (11) oder einer ringförmigen Ausnehmung des Riemenrades (10) untergebrachte Ringmagnet- bzw. Ringspulenanordnung (6) zum Andruck einer am Lamellenträger (12) drehfesten Lamelle (15) an die Reibfläche (10') aufweist, wobei auf der Eingangswelle (2) eine Hülse (8) drehfest gehaltert, auf der Hülse (8) das Riemenrad (10) drehgelagert und stirnseitig an der Hülse (8) der Lamellenträger (129) angeflanscht ist.

5. Kompressor nach Anspruch 4,
**dadurch gekennzeichnet,**
**daß** auf einer am Kompressorgehäuse (1) ausgebildeten Flanschfläche (3), aus der die Eingangswelle (2) herausragt, eine die Ringmagnet- bzw. Ringspulenanordnung (6) stationär tragende Flanschplatte (4) mit einer innerhalb der Ringmagnet- bzw. Ringspulenanordnung (6) angeordneten, von der Eingangswelle (2) durchsetzten Öffnung (5) vorgesehen ist.

6. Kompressor nach Anspruch 5,
**dadurch gekennzeichnet,**
**daß** in der Flanschplatte (4) eine Nut bzw. ein Kanal zur Aufnahme eines Anschlußkabels (16) der Ringmagnet- bzw. Ringspulenanordnung (6) ausgebildet ist.

7. Kompressor nach Anspruch 6,
**dadurch gekennzeichnet,**
**daß** die Nut bzw. der Kanal auf der dem Kompressorgehäuse (1) zugewandten Seite der Flanschplatte (4) ausgebildet ist.

## Claims

1. A supercharger (1) on the input side of a combustion engine of a motor vehicle, with a switchable clutch (6, 10', 12, 15) in the drive connection (2, 10, 17) between the combustion engine and the supercharger (1), and with a controller (20,21) which allows the clutch to initially pass through a prescribed slip phase during closing, **characterized by** the controller (20, 21) that permits closing the clutch only above a threshold for the combustion engine speed or above a parameter correlated with said speed, and opens the clutch below another threshold for said speed or said correlated parameter; wherein this additional threshold lies below the previously mentioned threshold.

2. The supercharger according to claim 1, **characterized by** the fact that an electromagnetic clutch is provided, and the controller (20, 21) changes an electrical clutch current with a delay and/or in multiple stages during coupling.

3. The supercharger according to claim 2, **characterized by** the fact that the clutch current is reduced with a delay and/or in multiple stages while opening the clutch.

4. The supercharger according to one of claims 1 to 3, **characterized by** the fact that a supercharger-driving input shaft (2) can be linked with a pulley (10) drivable by the combustion engine via the switchable electromagnetic clutch, which has a frictional surface (10') arranged on the front of the pulley (10), as well as a multi-plate carrier (12) non-rotationally secured to the input shaft (2) and a ring magnet or ring coil device (6) accommodated in an annular slit (11) or an annular recess in the pulley (10) and used to press a plate (15) non-rotationally secured to the multi-plate carrier (12) against the frictional surface (10'), wherein a sleeve (8) is non-rotationally secured to the input shaft (2), the pulley (10) is pivoted to the sleeve (8), and the multi-plate carrier (12) is flanged to the front of the sleeve (8).

5. The supercharger according to claim 4, **characterized by** the fact that a flange plate (4) that statonaryly carries the ring magnet or ring coil device (6) and has an opening (5) penetrated by the input shaft (2) and situated inside the ring magnet or ring coil device (6) is secured to a flange surface (3) on the supercharger casing (1) from which the input shaft (2) projects.

6. The supercharger according to claim 5, **characterized by** the fact that a groove or channel is provided in the flange plate (4) for accommodating a connecting cable (16) of the ring magnet or ring coil device (6).

7. The supercharger according to claim 6, **characterized by** the fact that the groove or channel is formed on the side of the flange plate (4) facing the supercharger casing (1).

## Revendications

1. Compresseur (1) placé côté entrée d'un moteur à combustion d'un véhicule automobile, comportant un embrayage commutable (6, 10', 12, 15) dans la liaison de propulsion (2, 10, 17) entre le moteur à combustion et le compresseur (1) et une commande (20, 21) qui, en cas de fermeture, fait d'abord passer l'embrayage par une phase de dérapage prédéfinie, **caractérisé par** la commande (20, 21) qui ne permet de fermer l'embrayage (6, 10', 12, 15) qu'au dessus d'une valeur seuil de régime du moteur à combustion ou au dessus d'un paramètre en corrélation avec le régime et ouvre l'embrayage en dessous d'une autre valeur seuil de régime ou du paramètre en corrélation, cette autre valeur seuil se situant en dessous de la valeur seuil précitée.

2. Compresseur selon la revendication 1, **caractérisé en ce que** il est prévu un embrayage électromagnétique et que la commande (20, 21), lors de l'embrayage, modifie un courant électrique d'embrayage avec un retard et/ou en plusieurs étapes.

3. Compresseur selon la revendication 2, **caractérisé en ce que** le courant d'embrayage, lors de l'ouverture de l'embrayage, est réduit avec un retard et/ou en plusieurs étapes.

4. Compresseur selon l'une quelconque des revendications 1 à 3, **caractérisé en ce que** un arbre d'entrée (2) entraînant le compresseur peut être accouplé à une roue à courroie (10) pouvant être propulsée par le moteur à combustion par le biais de l'embrayage électromagnétique commutable, qui présente sur sa face frontale une surface de frottement (10') disposée sur la roue à courroie (10) ainsi qu'un porte-lamelles (12) disposé de manière fixe en rotation sur l'arbre d'entrée (2) et un dispositif à aimant annulaire ou à bobine toroïdale logé dans une fente annulaire (11) ou un évidement de forme annulaire de la roue à courroie (10) afin de comprimer une lamelle fixe en rotation sur le porte-lamelles (12) contre la surface de frottement (10'), étant disposé sur l'arbre d'entrée (2) de manière fixe en rotation un manchon (8), manchon (8) sur lequel est disposée la roue à courroie (10) et le porte-lamelles (12) étant fixé par bride sur le manchon (8) sur la face frontale.

5. Compresseur selon la revendication 4, **caractérisé en ce que** il est prévu, sur une surface de bride (3) formée sur le boîtier du compresseur (1), dont dépasse l'arbre d'entrée (2), une plaque de bride (4) supportant de manière, stationnaire le dispositif à aimant annulaire ou à bobine toroïdale (6) et présentant un orifice (5) pratiqué à l'intérieur du dispositif à aimant annulaire ou à bobine toroïdale (6) et traversé par l'arbre d'entrée (2).

6. Compresseur selon la revendication 5, **caractérisé en ce que** il est formé dans la plaque de bride (4) une gorge ou un canal destiné à recevoir un câble de raccordement (16) du dispositif à aimant annulaire ou à bobine toroidale (6).

7. Compresseur selon la revendication 6, **caractérisé en ce que** la rainure ou le canal est formé sur le côté tourné vers le boîtier du compresseur (1) de la plaque à bride (4).
